# EUROPÄISCHE PATENTSCHRIFT

(11) **EP 2 809 562 B1**
(45) Veröffentlichungstag und Bekanntmachung des Hinweises auf die Patenterteilung: **08.03.2017**
(21) Anmeldenummer: 13717217.7
(22) Anmeldetag: 04.04.2013
(51) Int. Cl.: B61D 17/00, F16B 2/20, B61D 17/04, B61D 17/18, F16B 2/24, B60R 13/02

(54) **WAGENKASTEN**
BODY
CAISSE

(30) Priorität: 10.05.2012 DE 102012207781
(43) Veröffentlichungstag der Anmeldung: 10.12.2014
(73) Patentinhaber: Siemens Aktiengesellschaft, 80333 München (DE)
(72) Erfinder: BIADATZ, Adrian, 47804 Krefeld (DE); GROSS, Bernd, 47802 Krefeld (DE); KIRCHHOFF, Sascha, 47799 Krefeld (DE)
(86) Internationale Anmeldenummer: PCT/EP2013/057080
(87) Internationale Veröffentlichungsnummer: WO 2013/167325

(56) Entgegenhaltungen:
- DE-A1- 3 732 086
- FR-A- 1 428 487
- GB-A- 633 751

## Beschreibung

Die Erfindung bezieht sich auf einen Wagenkasten, insbesondere einen Schienenfahrzeugwagenkasten, mit zumindest einem Rohbauprofil und zumindest einem mit dem Rohbauprofil verbundenen Innenausbauteil nach dem Oberbegriff von Anspruch 1.

Ein solcher Wagenkasten ist beispielsweise aus der DE 37 32 086 A1 bekannt.

Bei Schienenfahrzeugwagenkästen werden zur Befestigung von Innenausbauteilen heutzutage üblicherweise Bohrungen in den Rohbauprofilen des Rohbaus der Schienenfahrzeugwagenkästen als Befestigungsebenen benötigt. Mittels dieser Bohrungen werden Befestigungselemente am Fahrzeugrohbau angeschraubt, an denen wiederum im Weiteren die Innenausbauteile befestigt werden. Das Montieren von Innenausbauteilen mittels Verschraubung der Befestigungselemente am Fahrzeugrohbau ist relativ zeitaufwendig.

Der Erfindung liegt die Aufgabe zugrunde, einen Wagenkasten, insbesondere einen Schienenfahrzeugwagenkasten, anzugeben, der sich besonders einfach und schnell fertigen lässt.

Diese Aufgabe wird erfindungsgemäß durch einen Wagenkasten mit den Merkmalen gemäß Patentanspruch 1 gelöst. Vorteilhafte Ausgestaltungen des erfindungsgemäßen Wagenkastens sind in Unteransprüchen angegeben.

Danach ist erfindungsgemäß vorgesehen, dass das Befestigungselement mit einem Klammerabschnitt auf das Rohbauprofil aufgeschoben und dort verklemmt ist, das Befestigungselement eine Auflageplatte aufweist, auf der das Innenausbauteil des Wagenkastens aufliegt, das Innenausbauteil ein Verkleidungsteil des Wagenkastens bildet, die Auflageplatte und der Klammerabschnitt durch ein Abstandselement verbunden sind und das Innenausbauteil des Wagenkastens zwischen der Auflageplatte des Befestigungselements und einer Klemmplatte eingeklemmt ist.

Ein wesentlicher Vorteil des erfindungsgemäßen Wagenkastens ist darin zu sehen, dass dieser eine Montage von Befestigungselementen an Rohbauprofilen allein durch Aufschieben und Verklemmen ermöglicht. Im Unterschied zu vorbekannten Wagenkästen ist es nicht erforderlich, die Befestigungselemente mit den Rohbauprofilen zu verschrauben.

Ein weiterer wesentlicher Vorteil des erfindungsgemäßen Wagenkastens besteht darin, dass dieser toleranzunempfindlicher fertigbar ist, da in den Rohbauprofilen zur Befestigung der Befestigungselemente keine Bohrungen vorgesehen werden müssen, die eine spätere Positionierung der Befestigungselemente festlegen würden. Durch das erfindungsgemäß vorgesehene Aufschieben und Verklemmen der Befestigungselemente ist es möglich, die Positionierung der Befestigungselemente am Rohbauprofil an etwaig vorher aufgetretene Herstellungstoleranzen anzupassen, indem die Positionierung der Befestigungselemente beim Aufschieben nachträglich modifiziert wird.

Um eine besonders schnelle und einfache Befestigung des Befestigungselements zu ermöglichen, wird es als vorteilhaft angesehen, wenn das Rohbauprofil einen Rand aufweist und der Rand von dem Klammerabschnitt klammernd umfasst wird.

Gemäß einer besonders bevorzugten Ausgestaltung des Wagenkastens ist vorgesehen, dass eine erste Klammerinnenfläche des Klammerabschnitts flächig auf dem Rohbauprofil aufliegt und die gegenüberliegende zweite Klammerinnenfläche des Klammerabschnitts punkt- oder linienförmig, insbesondere unter Bildung einer Auflagekante, auf dem Rohbauprofil aufliegt.

Mit Blick auf die Montage des Innenausbauteils wird es als vorteilhaft angesehen, wenn sich die Klammerinnenfläche des Klammerabschnitts, die flächig auf dem Rohbauprofil aufliegt, auf der dem Innenausbauteil zugewandten Seite des Rohbauprofils befindet und sich die gegenüberliegende Klammerinnenfläche des Klammerabschnitts, die punkt- oder linienförmig auf dem Rohbauprofil aufliegt, auf der dem Innenausbauteil abgewandten Seite des Rohbauprofils befindet.

Vorzugsweise liegt ein erstes Klammerende des Klammerabschnitts auf der dem Innenausbauteil zugewandten Seite des Rohbauprofils und ein zweites Klammerende des Klammerabschnitts auf der dem Innenausbauteil abgewandten Seite des Rohbauprofils, wobei das zweite Klammerende von dem Rohbauprofil weggebogen ist.

Vorzugsweise weist das Rohbauprofil einen sich an den Rand anschließenden ebenen Plattenabschnitt und einen gebogenen Abschnitt auf, der durch den ebenen Plattenabschnitt von dem Rand getrennt ist und aus der Ebene des ebenen Plattenabschnitts weggebogen ist.

Das erste Klammerende des Klammerabschnitts ist bevorzugt ebenfalls gebogen und liegt auf dem gebogenen Abschnitt des Rohbauprofils bevorzugt flächig auf.

Die Auflageplatte und der Klammerabschnitt sind durch ein Abstandselement miteinander verbunden. Das Abstandselement ist besonders bevorzugt rotations- oder drehsymmetrisch, um eine feste Verbindung zu gewährleisten. Besonders bevorzugt erstreckt sich das Abstandselement senkrecht zum Trägerelement und senkrecht zur Auflageplatte.

Um eine Montage des Innenausbauteils an dem Befestigungselement zu vereinfachen, wird es als vorteilhaft angesehen, wenn das Innenausbauteil des Wagenkastens zwischen der Auflageplatte des Befestigungselements und einer Klemmplatte eingeklemmt wird.

In der Auflageplatte und/oder in dem Abstandselement ist vorzugsweise ein Gewinde vorhanden, in das eine Schraube eingeschraubt ist. Die Schraube kann beispielsweise die Klemmplatte und die Auflageplatte und/oder die Klemmplatte und das Abstandselement miteinander verschrauben.

Besonders bevorzugt wird das Befestigungselement an dem Rohbauprofil ausschließlich durch die Klemmkraft des Klammerabschnitts gehalten.

Die Erfindung bezieht sich darüber hinaus auf ein Verfahren zum Herstellen eines Wagenkastens, insbesondere eines Schienenfahrzeugwagenkastens, bei dem zumindest ein Rohbauprofil und zumindest ein Innenausbauteil miteinander verbunden werden.

Erfindungsgemäß ist bezüglich eines solchen Verfahrens vorgesehen, dass ein Klammerabschnitt mindestens eines Befestigungselements auf das Rohbauprofil aufgeschoben und dort verklemmt wird und das Innenausbauteil an dem Befestigungselement befestigt wird.

Bezüglich der Vorteile des erfindungsgemäßen Verfahrens sei auf die obigen Ausführungen im Zusammenhang mit dem erfindungsgemäßen Wagenkasten verwiesen, da die Vorteile des erfindungsgemäßen Wagenkastens denen des erfindungsgemäßen Verfahrens im Wesentlichen entsprechen.

Die Erfindung wird nachfolgend anhand von Ausführungsbeispielen näher erläutert; dabei zeigen beispielhaft
- Figur 1: ein Ausführungsbeispiel für einen erfindungsgemäßen Schienenfahrzeugwagenkasten, bei dem ein Innenausbauteil an einem Rohbauprofil mit Hilfe eines Befestigungselements gehalten wird,
- Figur 2: das Befestigungselement und das Rohbauprofil gemäß Figur 1 im Querschnitt und
- Figur 3: das Befestigungselement sowie das Rohbauprofil gemäß Figur 1 in einer weiteren dreidimensionalen Sicht.

Der Übersicht halber werden in den Figuren für identische oder vergleichbare Komponenten stets dieselben Bezugszeichen verwendet.

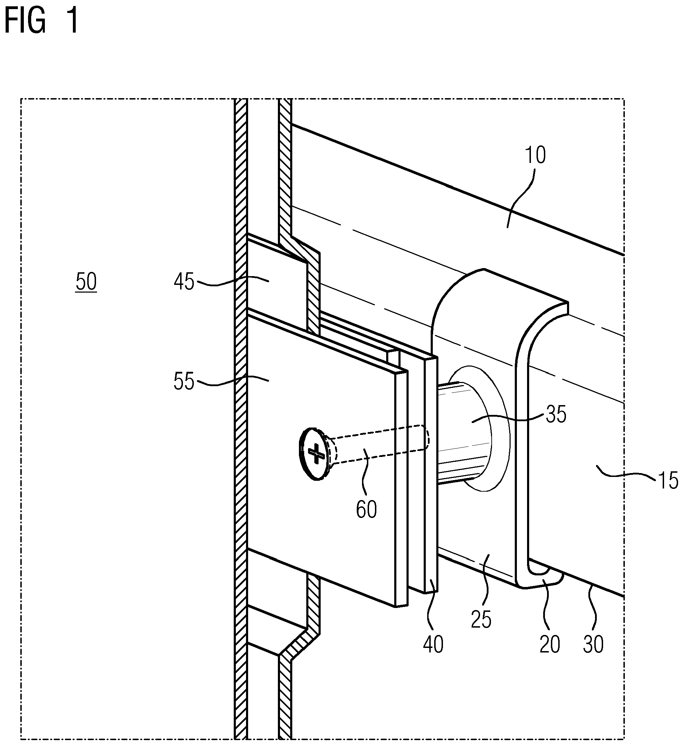

Die Figur 1 zeigt ein Ausführungsbeispiel für einen Schienenfahrzeugwagenkasten 10, von dem der Übersicht halber in der Figur 1 lediglich ein Abschnitt dargestellt ist. Der Rohbau des Schienenfahrzeugkastens 10 umfasst ein Rohbauprofil 15, auf das ein Klammerabschnitt 20 eines Befestigungselements 25 bei der Darstellung gemäß Figur 1 von unten aufgeschoben ist. Der Klammerabschnitt 20 des Befestigungselements 25 umfasst bzw. umklammert einen unteren Rand 30 des Rohbauprofils 15.

Mit dem Klammerabschnitt 20 des Befestigungselements 25 steht ein Abstandselement 35 in Verbindung, das sich senkrecht, zumindest näherungsweise senkrecht, von dem Klammerabschnitt 20 und damit senkrecht, zumindest näherungsweise senkrecht, von dem Rohbauprofil 15 wegerstreckt. Das Abstandselement 35 steht mit seinem dem Klammerabschnitt 20 abgewandten Ende mit einer Auflageplatte 40 in Verbindung, die zumindest näherungsweise parallel zu dem Klammerabschnitt 20 und damit zumindest näherungsweise parallel zu dem Rohbauprofil 15 angeordnet ist.

Auf der Auflageplatte 40 des Befestigungselements 25 liegt ein Innenausbauteil 45 des Schienenfahrzeugwagenkastens 10 auf. Das Innenausbauteil 45 kann beispielsweise ein Verkleidungsteil oder einen Bestandteil eines Verkleidungsteils 50 des Schienenfahrzeugkastens 10 bilden.

In der Figur 1 lässt sich erkennen, dass das Innenausbauteil 45 mittels einer Klemmplatte 55 auf die Auflageplatte 40 gepresst wird, wodurch eine Fixierung des Innenausbauteils 45 auf dem Befestigungselement 25 erreicht wird. Die zum Verklemmen erforderliche Klemmkraft zwischen der Klemmplatte 55 und der Auflageplatte 40 wird beispielsweise durch eine Schraube 60 bewirkt, die in ein Gewinde im Abstandselement 35 und/oder in ein Gewinde in der Auflageplatte 40 eingeschraubt wird. Anstelle einer Schraubverbindung kann alternativ eine Niet-, Klebe- oder Schweißverbindung hergestellt werden.

In der Figur 1 lässt sich erkennen, dass ein Anbringen des Befestigungselements 25 an dem Rohbauprofil 15 schnell und einfach möglich ist, da bei der Montage lediglich der Klammerabschnitt 20 des Befestigungselements 25 auf den unteren Rand 30 des Rohbauprofils 15 aufgeschoben werden muss. Ein Festschrauben des Befestigungselements 25 am Rohbauprofil 15 ist nicht erforderlich, so dass der Montageaufwand des Befestigungselements 25 auf ein Minimum reduziert wird; außerdem können Justagetoleranzen ausgeglichen werden, indem die Position des Befestigungselements 25 am Rohbauprofil 15 beim Aufschieben angepasst wird.

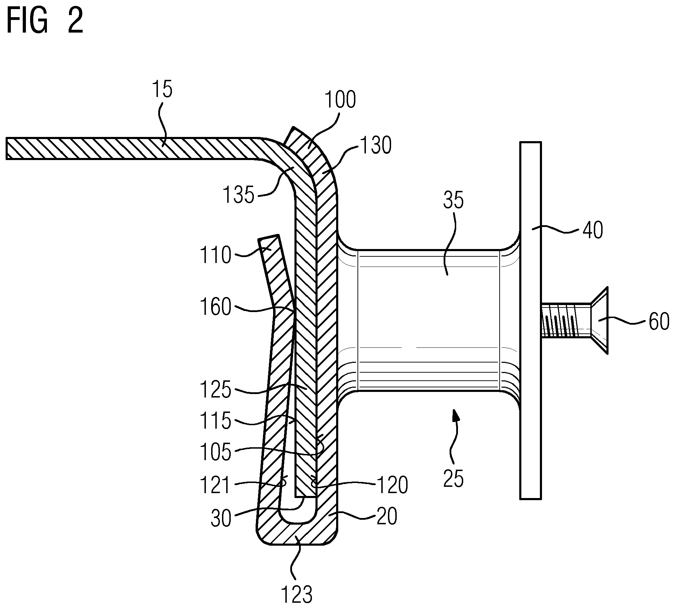

Die Figur 2 zeigt die Befestigung des Befestigungselements 25 an dem unteren Rand 30 des Rohbauprofils 15 näher im Detail im Querschnitt. Es lässt sich erkennen, dass der Klammerabschnitt 20 des Befestigungselements 25 zwei Klammerenden aufweist, nämlich ein erstes Klammerende 100, das sich auf der dem Abstandselement 35 sowie der Auflageplatte 40 zugewandten Seite 105 des Rohbauprofils 15 befindet, sowie ein zweites Klammerende 110, das auf der dem Abstandselement 35 sowie der Auflageplatte 40 abgewandten Seite 115 des Rohbauprofils 15 liegt.

In der Figur 2 lässt sich darüber hinaus erkennen, dass der Klammerabschnitt 20 zwei Klammerinnenflächen aufweist, nämlich eine erste Klammerinnenfläche 120 sowie eine zweite Klammerinnenfläche 121.

Die erste Klammerinnenfläche 120 liegt auf der dem Abstandselement 35 zugewandten Seite 105 des Rohbauprofils 15 auf und ist von der Form her an die Form des Rohbauprofils 15 angepasst. So lässt sich erkennen, dass der an den Klammerboden 123 des Klammerabschnitts 20 angrenzende untere Abschnitt der ersten Klammerinnenfläche 120 plan bzw. eben ist und somit plan unter flächiger Kontaktbildung auf einem ebenen Plattenabschnitt 125 des Rohbauprofils 15 aufliegt. Die Reibung zwischen der ersten Klammerinnenfläche 120 und dem ebenen Plattenabschnitt 125 ist somit maximal. Der ebene Plattenabschnitt 125 des Rohbauprofils 15 grenzt vorzugsweise unmittelbar an den Rand 30 des Rohbauprofils 15 an.

Das erste Klammerende 100 des Klammerabschnitts 20 weist darüber hinaus vorzugsweise einen gebogenen Endabschnitt 130 auf, der auf einem gebogenen Abschnitt 135 des Rohbauprofils 15 flächig aufliegt. Der gebogene Abschnitt 135 des Rohbauprofils 15 schließt sich vorzugsweise unmittelbar an den ebenen Plattenabschnitt 125 des Rohbauprofils 15 an.

Die Funktion des gebogenen Abschnitts 135 des Rohbauprofils 15 sowie die des gebogenen Endabschnitts 130 des ersten Klammerendes 100 besteht darin, die Haltekraft zu erhöhen und ein Runterrutschen des Klammerabschnitts 20 von dem Rohbauprofil 15 zu vermeiden.

Die zweite Klammerinnenfläche 121 liegt lediglich punkt- oder linienförmig auf der dem Abstandselement 35 abgewandten Seite 115 des ebenen Plattenabschnitts 125 auf, um eine maximale Andruckkraft der zweiten Klammerinnenfläche 121 auf den ebenen Plattenabschnitt 125 durch eine federnde Vorspannung zu bewirken. Die Auflagelinie oder Auflagekante, mit der die zweite Klammerinnenfläche 121 auf der Seite 115 des Rohbauprofils 15 aufliegt, ist in der Figur 2 mit dem Bezugszeichen 160 gekennzeichnet. Die Auflagekante 160 liegt gemeinsam mit der ersten Klammerinnenfläche 120 auf dem ebenen Plattenabschnitt 125 des Rohbauprofils 15 auf und ruft mit dieser gemeinsam eine Klemmkraft hervor.

Um die auf dem ebenen Plattenabschnitt 125 aufliegende Auflagekante 160 zu bilden, ist das zweite Klammerende 110 vorzugsweise von der Auflagekante 160 und dem ebenen Plattenabschnitt 125 weggebogen.

Die Figur 2 zeigt darüber hinaus die Schraube 60, die ein Aufschrauben der in der Figur 1 gezeigten Klemmplatte 55 auf der Auflageplatte 40 ermöglicht.

Darüber hinaus ist in der Figur 2 erkennbar, dass das Abstandselement 35 rotationssymmetrisch sein kann und vorzugsweise sowohl senkrecht zum Klammerabschnitt 20 als auch senkrecht zur Auflageplatte 40 ausgerichtet ist.

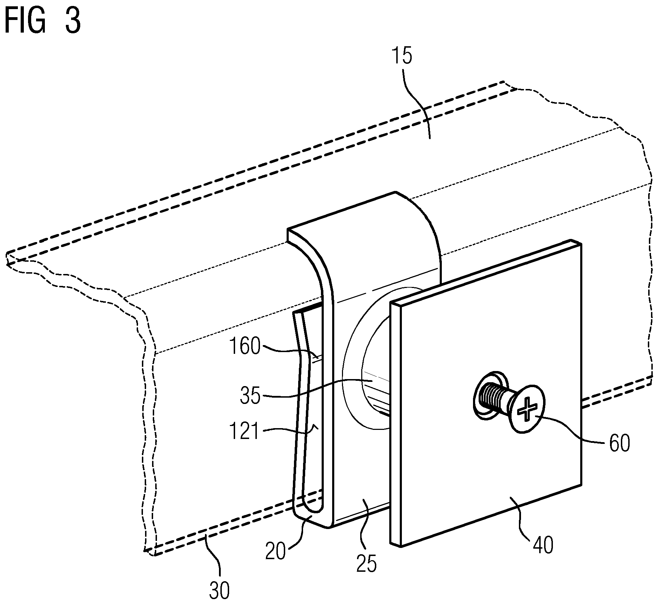

Die Figur 3 zeigt das Rohbauprofil 15 sowie das daran befestigte Befestigungselement 25 nochmals in einer dreidimensionalen Sicht von der Seite. Es lässt sich erkennen, dass der Klammerabschnitt 20 den unteren Rand 30 des Rohbauprofils 15 umklammert und durch Klemmkraft an dem Rohbauprofil 15 gehalten wird. Darüber hinaus lässt sich die Auflagekante 160 erkennen, mit der die zweite Klammerinnenfläche 121 des Klammerabschnitts 20 auf der dem Abstandselement 35 abgewandten Seite des Rohbauprofils 15 aufliegt.

Auch ist die Schraube 60 erkennbar, die in ein Gewinde im Abstandselement 35 und/oder in ein Gewinde in der Auflageplatte 40 eingeschraubt ist.

Obwohl die Erfindung im Detail durch bevorzugte Ausführungsbeispiele näher illustriert und beschrieben wurde, so ist die Erfindung nicht durch die offenbarten Beispiele eingeschränkt.

## Patentansprüche

1. Wagenkasten, insbesondere Schienenfahrzeugwagenkasten (10), mit zumindest einem Rohbauprofil (15) und zumindest einem mit dem Rohbauprofil (15) verbundenen Innenausbauteil (45), wobei das Innenausbauteil (45) an dem Rohbauprofil (15) von mindestens einem Befestigungselement (25) gehalten wird, **dadurch gekennzeichnet, dass**
das Befestigungselement (25) mit einem Klammerabschnitt (20) auf das Rohbauprofil (15) aufgeschoben und dort verklemmt ist, das Befestigungselement (25) eine Auflageplatte (40) aufweist, auf der das Innenausbauteil (45) des Wagenkastens aufliegt, das Innenausbauteil (45) ein Verkleidungsteil (50) des Wagenkastens bildet, die Auflageplatte (40) und der Klammerabschnitt (20) durch ein Abstandselement (35) verbunden sind und
das Innenausbauteil (45) des Wagenkastens zwischen der Auflageplatte (40) des Befestigungselements (25) und einer Klemmplatte (55) eingeklemmt ist.

2. Wagenkasten nach Anspruch 1,
**dadurch gekennzeichnet, dass**
- das Rohbauprofil (15) einen Rand (30) aufweist und
- der Rand (30) von dem Klammerabschnitt (20) klammernd umfasst wird.

3. Wagenkasten nach einem der voranstehenden Ansprüche, **dadurch gekennzeichnet, dass**
- eine erste Klammerinnenfläche (120) des Klammerabschnitts (20) flächig auf dem Rohbauprofil (15) aufliegt und
- die gegenüberliegende zweite Klammerinnenfläche (121) des Klammerabschnitts (20) punkt- oder linienförmig, insbesondere unter Bildung einer Auflagekante (160), auf dem Rohbauprofil (15) aufliegt.

4. Wagenkasten nach Anspruch 3,
**dadurch gekennzeichnet, dass**
- die Klammerinnenfläche (120) des Klammerabschnitts (20), die flächig auf dem Rohbauprofil (15) aufliegt, auf der dem Innenausbauteil (45) zugewandten Seite (105) des Rohbauprofils (15) liegt und
- die gegenüberliegende Klammerinnenfläche (121) des Klammerabschnitts (20), die punkt- oder linienförmig auf dem Rohbauprofil (15) aufliegt, auf der dem Innenausbauteil (45) abgewandten Seite (115) des Rohbauprofils (15) liegt.

5. Wagenkasten nach einem der voranstehenden Ansprüche, **dadurch gekennzeichnet, dass**
- ein erstes Klammerende (100) des Klammerabschnitts (20) auf der dem Innenausbauteil (45) zugewandten Seite (105) des Rohbauprofils (15) liegt,
- ein zweites Klammerende (110) des Klammerabschnitts (20) auf der dem Innenausbauteil (45) abgewandten Seite (115) des Rohbauprofils (15) liegt, und
- das zweite Klammerende (110) von dem Rohbauprofil (15) weggebogen ist.

6. Wagenkasten nach einem der voranstehenden Ansprüche, **dadurch gekennzeichnet, dass**
das Rohbauprofil (15) einen sich an den Rand (30) anschließenden ebenen Plattenabschnitt (125) und einen gebogenen Abschnitt (135) aufweist, der durch den ebenen Plattenabschnitt (125) von dem Rand (30) getrennt ist und aus der Ebene des ebenen Plattenabschnitts (125) weggebogen ist.

7. Wagenkasten nach Anspruch 6,
**dadurch gekennzeichnet, dass**
das erste Klammerende (100) des Klammerabschnitts (20) ebenfalls gebogen ist und auf dem gebogenen Abschnitt (135) des Rohbauprofils (15) flächig aufliegt.

8. Wagenkasten nach einem der voranstehenden Ansprüche, **dadurch gekennzeichnet, dass**
in der Auflageplatte (40) und/oder in dem Abstandselement (35) ein Gewinde vorhanden ist, in das eine Schraube (60) eingeschraubt ist.

9. Wagenkasten nach Anspruch 8,
**dadurch gekennzeichnet, dass**
die Schraube (60) die Klemmplatte (55) und die Auflageplatte (40) und/oder die Klemmplatte (55) und das Abstandselement (35) miteinander verschraubt.

10. Wagenkasten nach einem der voranstehenden Ansprüche, **dadurch gekennzeichnet, dass**
das Befestigungselement (25) an dem Rohbauprofil (15) ausschließlich durch die Klemmkraft des Klammerabschnitts (20) gehalten wird.

## Claims

1. Body, in particular a rail vehicle body (10), having at least one body shell profile (15) and at least one interior fitting (45) connected to the body shell profile (15), wherein the interior fitting (45) is held on the body shell profile (15) by at least one fastening element (25),
**characterized in that**
the fastening element (25) is slipped onto the body shell profile (15) using a clip section (20) and clamped there, the fastening element (25) has a bearing plate (40) on which interior fitting (45) of the body rests, the interior fitting (45) forms a covering part (50) of the body, the bearing plate (40) and the clip section (20) are connected by a spacer element (35) and
the interior fitting (45) of the body is clamped between the bearing plate (40) of the fastening element (25) and a clamping plate (55).

2. Body according to Claim 1,
**characterized in that**
- the body shell profile (15) has a periphery (30) and
- the periphery (30) is enclosed in a clamping manner by the clip section (20).

3. Body according to one of the preceding claims, **characterized in that**
- a first internal clip surface (120) of the clip section (20) rests on the body shell profile (15) in planar fashion and
- the opposite second internal clip surface (121) of the clip section (20) rests on the body shell profile (15) in punctiform or linear fashion, in particular forming a bearing edge (160).

4. Body according to Claim 3,
**characterized in that**
- the internal clip surface (120) of the clip section (20) which rests on the body shell profile (15) in planar fashion rests on the side (105) of the body shell profile (15) facing the interior fitting (45) and
- the opposite internal clip surface (121) of the clip section (20) which rests on the body shell profile (15) in punctiform or linear fashion rests on the side (115) of the body shell profile (15) facing away from the interior fitting (45).

5. Body according to one of the preceding claims, **characterized in that**
- a first clip end (100) of the clip section (20) rests on the side (105) of the body shell profile (15) facing the interior fitting (45),
- a second clip end (110) of the clip section (20) rests on the side (115) of the body shell profile (15) facing away from the interior fitting (45) and
- the second clip end (110) is bent away from the body shell profile (15).

6. Body according to one of the preceding claims,
**characterized in that**
the body shell profile (15) has a planar plate section (125) adjoining the periphery (30) and a bent section (135) which is separated from the periphery (30) by the planar plate section (125) and is bent away from the plane of the planar plate section (125).

7. Body according to Claim 6,
**characterized in that**
the first clip end (100) of the clip section (20) is likewise bent and rests on the bent section (135) of the body shell profile (15) in planar fashion.

8. Body according to one of the preceding claims,
**characterized in that**
there is preferably a thread in the bearing plate (40) and/or in the spacer element (35), into which a screw (60) is screwed.

9. Body according to Claim 8,
**characterized in that**
the screw (60), the clamping plate (55) and the bearing plate (40) and/or the clamping plate (55) and the spacer element (35) are screwed to one another.

10. Body according to one of the preceding claims,
**characterized in that**
the fastening element (25) is held on the body shell profile (15) solely by the clamping force of the clip section (20).

## Revendications

1. Caisse, notamment caisse ( 10 ) de véhicule ferroviaire, comprenant au moins un profilé ( 15 ) de chaudron et au moins une partie ( 45 ) d'aménagement intérieur reliée au profilé ( 15 ) de chaudron, la partie ( 15 ) d'aménagement intérieur étant retenue sur le profilé ( 15 ) de chaudron par au moins un élément ( 25 ) de fixation,
**caractérisée en ce que**
l'élément ( 25 ) de fixation est glissé par un crampon ( 20 ) sur le profilé ( 15 ) de caisson et y est cramponné, l'élément ( 25 ) de fixation a un plateau ( 40 ) d'application sur lequel s'applique la partie ( 45 ) d'aménagement intérieur de la caisse, la partie ( 45 ) d'aménagement intérieur forme une partie ( 50 ) d'habillage de la caisse, le plateau ( 40 ) d'application et le crampon ( 20 ) sont reliés par un élément ( 35 ) d'entretoisement et
la partie ( 45 ) d'aménagement intérieur de la caisse est serrée entre le plateau ( 40 ) d'application de l'élément ( 25 ) de fixation et un plateau ( 55 ) de serrage.

2. Caisse suivant la revendication 1,
**caractérisée en ce que**
- le profilé ( 15 ) de chaudron a un bord ( 30 ) et
- le bord ( 30 ) est entouré avec serrage du crampon ( 20 ).

3. Caisse suivant l'une des revendications précédentes,
**caractérisée en ce que**
- une première surface ( 120 ) intérieure du crampon ( 20 ) s'applique à plat sur le profilé ( 15 ) de chaudron et
- la deuxième surface ( 121 ) intérieure opposée du crampon ( 20 ) s'applique ponctuellement ou linéairement, notamment en formant un bord ( 160 ) d'appui sur le profilé ( 15 ) de chaudron.

4. Caisse suivant la revendication 3,
**caractérisée en ce que**
- la surface ( 120 ) intérieure du crampon ( 20 ), qui s'applique à plat sur le profilé ( 15 ) de chaudron, se trouve du côté ( 105 ) du profilé ( 15 ) de chaudron, tourné vers la partie ( 45 ) d'aménagement intérieur et
- la surface ( 121 ) intérieure opposée du crampon ( 20 ), qui s'applique ponctuellement ou linéairement au profilé ( 15 ) de chaudron, s'applique au côté du profilé ( 15 ) de chaudron, loin de la partie ( 45 ) d'aménagement intérieur.

5. Caisse suivant l'une des revendications précédentes,
**caractérisée en ce que**
- une première extrémité ( 100 ) du crampon ( 20 ) s'applique au côté ( 105 ) du profilé ( 15 ) de chaudron tourné vers la partie ( 45 ) d'aménagement intérieur,
- une deuxième extrémité ( 110 ) du crampon ( 20 ) s'applique au côté ( 115 ) du profilé ( 15 ) de chaudron, loin de la partie ( 45 ) d'aménagement intérieur et
- la deuxième extrémité ( 110 ) du crampon est courbée en s'éloignant du profilé ( 15 ) de chaudron.

6. Caisse suivant l'une des revendications précédentes,
**caractérisée en ce que**
le profilé ( 15 ) de chaudron a une partie ( 125 ) de plateau plane se raccordant au bord ( 30 ) et une partie ( 135 ) courbée, qui est séparée du bord ( 30 ) par la partie ( 125 ) de plateau plane et qui s'éloigne du plan de la partie ( 125 ) de plateau plane.

7. Caisse suivant la revendication 6,
**caractérisée en ce que**
la première extrémité ( 100 ) du crampon ( 20 ) est également courbée et s'applique à plat sur la partie ( 135 ) courbée du profilé ( 15 ) de chaudron.

8. Caisse suivant l'une des revendications précédentes,
**caractérisée en ce qu'**
il y a, dans le plateau ( 40 ) d'appui et/ou dans l'élément ( 35 ) d'entretoisement, un filetage dans lequel une vis ( 60 ) est vissée.

9. Caisse suivant la revendication 8,
**caractérisée en ce que**
la vis ( 60 ), le plateau ( 55 ) de serrage et le plateau ( 40 ) d'application et/ou le plateau ( 55 ) de serrage et l'élément ( 35 ) d'entretoisement, sont vissés entre eux.

10. Caisse suivant l'une des revendications précédentes,
**caractérisée en ce que**
l'élément ( 25 ) de fixation est maintenu sur le profilé ( 15 ) de chaudron exclusivement par la force de serrage du crampon ( 20 ).
